(19) **Europäisches Patentamt / European Patent Office / Office européen des brevets**

(11) **EP 4 416 023 B1**

(12) **FASCICULE DE BREVET EUROPEEN**

(45) Date de publication et mention de la délivrance du brevet:
**03.12.2025 Bulletin 2025/49**

(21) Numéro de dépôt: **22800266.3**

(22) Date de dépôt: **10.10.2022**

(51) Classification Internationale des Brevets (IPC):
**B60T 7/22** *(2006.01)* **B60W 30/095** *(2012.01)*
**B60W 30/16** *(2020.01)*

(52) Classification Coopérative des Brevets (CPC):
**B60T 7/22; B60W 30/0953; B60W 30/0956; B60W 30/16;** B60T 2201/022; B60W 2520/10; B60W 2554/804; B60W 2754/30; B60W 2754/50

(86) Numéro de dépôt international:
**PCT/EP2022/078094**

(87) Numéro de publication internationale:
**WO 2023/061936 (20.04.2023 Gazette 2023/16)**

(54) **PROCEDE DE COMMANDE DE FREINAGE**

VERFAHREN ZUR BREMSSTEUERUNG

BRAKING CONTROL METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.10.2021 FR 2110881**

(43) Date de publication de la demande:
**21.08.2024 Bulletin 2024/34**

(73) Titulaire: **Ampere SAS**
**92100 Boulogne-Billancourt (FR)**

(72) Inventeurs:
• **CARVALHO, Julien**
**78084 Guyancourt cedex (FR)**
• **HALLOUIN, Thibault**
**78084 Guyancourt cedex (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**DE-A1- 102015 216 679 FR-A1- 2 763 902**

**Description**

La présente invention concerne un procédé et un dispositif d'aide à la conduite connu par l'homme du métier sous l'acronyme anglo-saxon ADAS (« Advanced Driver Assistance System ») et se rapporte à un procédé de commande de force de freinage et plus particulièrement à un procédé de commande de force de freinage générée en association avec une opération de freinage d'urgence automatique en fonction d'une vitesse relative. Elle trouve une application avantageuse sous la forme d'un dispositif de commande de force de freinage pour véhicule automobile ainsi que d'un véhicule automobile équipé d'un tel dispositif de commande de force de freinage et d'un produit programme d'ordinateur comprenant des instructions de code de programme enregistrées sur un support lisible par ordinateur pour mettre en œuvre les étapes du procédé selon l'invention.

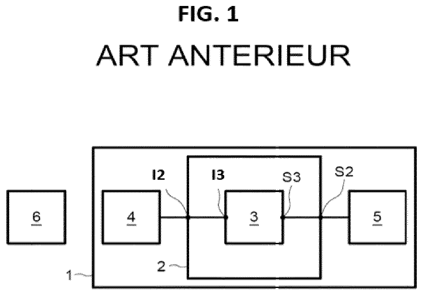

La [Fig.1] illustre l'architecture d'un module de freinage automatique d'urgence 3 incorporé dans un système d'aide à la conduite 2 d'un véhicule ego 1 selon l'état de la technique qui interagit avec une cible 6. Le véhicule 1 comprend des moyens de perception 4, notamment de caractéristiques propres à l'ego, telle que sa vitesse, tels que des capteurs de vitesse de roue par exemple, mais aussi de caractéristiques liées à l'environnement de l'ego, tels que des capteurs de distance, ou de détection d'objet, tels que par exemple un radar ou caméra, reliés à une entrée I2 du système d'aide à la conduite 2. Une sortie S2 du système d'aide à la conduite 2 est reliée par réseau CAN (acronyme anglo-saxon de « Controller Area Network ») au système de pilotage 5 des moyens de freinage, comprenant notamment le contrôleur en charge du contrôle dynamique du véhicule VDC (acronyme anglo-saxon de « Vehicle Dynamics Control ») et les moyens de freinage du véhicule 1, par exemple des freins à disque. L'ordre de freinage automatique d'urgence est ainsi usuellement transmis au VDC qui applique le couple de freinage aux moyens de freinage de véhicule 1. Le système d'aide à la conduite 2 comprend le module de freinage 3 dont une entrée I3 est reliée à l'entrée I2 du système 2 et une sortie S3 est raccordée à la sortie S2 du système 2. Les moyens de perception 4 transmettent au module 3 des informations de distance et de vitesse relative entre le véhicule 1 et la cible 6 par exemple une voiture, un piéton ou un cycliste. Lorsque le module de freinage 3 perçoit un risque avéré de collision entre la cible 6 et le véhicule 1, le module 3 communique avec le système de pilotage 5 qui pilote et actionne les moyens de freinage entraînant un freinage automatique du véhicule 1 de sorte à empêcher la collision entre la cible 6 et le véhicule 1. Le freinage automatique est piloté par le module 3 au maximum des possibilités des moyens de freinage. En d'autres termes, le freinage est piloté de sorte que la distance d'arrêt du véhicule 1 soit la plus courte possible tout en garantissant la sécurité et notamment la stabilité du véhicule ego. Le freinage ainsi piloté est un freinage d'urgence.

Ainsi, si un obstacle devant le véhicule égo est détecté, et si une collision avec l'obstacle est prévue, le véhicule ego exécute un freinage automatique, ce freinage automatique d'urgence pour automobile est connu par l'homme du métier sous l'acronyme anglosaxon AEB (« Autonomous Emergency Braking»), dont la loi de commande est hébergée par exemple dans le module 3. De cette façon, le freinage automatique permet d'éviter la collision prévue avec l'obstacle situé devant le véhicule ego.

Diverses méthodes de freinage automatique d'urgence sont connues de l'art antérieur, on connait par exemple le document EP3119648 ou le document EP3625092 qui s'intéressent à la détermination du déclenchement du freinage automatique d'urgence.

Le document FR1758199 s'intéresse à l'élaboration de la valeur de la consigne de freinage en cas de requête de freinage automatique d'urgence, prenant en compte les caractéristiques du véhicule et les conditions environnementales dans lesquelles évoluent le véhicule ego.

Cependant, en cas de freinage automatique d'urgence du véhicule ego, le véhicule suiveur doit exécuter une manœuvre de freinage ou de contournement, voire de changement de voie afin d'éviter de rentrer en collision dans le véhicule ego. Par conséquent, selon la façon dont le freinage autonome du véhicule ego est exécuté, le conducteur du véhicule suiveur peut ne pas être en mesure d'effectuer une opération de conduite appropriée après le freinage autonome d'urgence du véhicule ego, ce qui augmente le risque de collision par l'arrière du véhicule ego.

Compte tenu de ce qui précède, il est connu que pour des raisons de sécurité vis-à-vis du choc arrière, que le freinage automatique d'urgence présente une limite d'activation conditionnée par une vitesse longitudinale maximum du véhicule ego, par exemple une limite d'activation en vitesse absolue fixée par exemple à 80 km/h maximum du véhicule ego, cette solution limite donc considérablement la disponibilité du freinage automatique d'urgence quand le véhicule ego circule à vitesse élevée. De manière alternative, pour résoudre cette problématique, le document DE102010029223 s'intéresse à l'interruption ou à la réduction du freinage automatique d'urgence lorsque la vitesse de collision entre le véhicule ego et un véhicule suiveur dépasse un certain seuil, mais cette solution rencontre le même écueil que la précédente, et en cas de réduction de la force de freinage l'inconvénient associée réside notamment en un risque sécuritaire. De manière alternative, le document US2016221549 propose une unité de contrôle électronique qui va notamment moduler la force de freinage du véhicule en fonction de la distance et de la vitesse relative entre le véhicule et une cible, mais cette solution est complexe et implique un risque en termes de sécurité et de robustesse en ce qu'elle repose sur des informations externes issues de capteurs qui peuvent être source de risque quant à leur fiabilité.

Le document FR 2 763 902 AI divulgue des systèmes de commande adaptative de vitesse de croisière pour véhicule automobile.

Un des buts de l'invention est de remédier à au moins une partie des inconvénients de la technique antérieure en fournissant un procédé de commande de force de freinage qui permette d'améliorer la disponibilité de freinage automatique d'urgence intense lors des cas de circulation à haute vitesse (autoroute, routes nationales...) tout en garantissant la sécurité du véhicule ego et d'un éventuel véhicule suiveur de manière à ce que son conducteur ne soit pas surpris par un freinage automatique d'urgence du véhicule ego.

À cette fin, l'invention propose un procédé de commande de freinage automatique d'urgence d'un véhicule automobile ego comportant les étapes suivantes :

- initialisation d'un niveau d'une réserve de freinage à une valeur prédéterminée,
- initialisation à une valeur de temps prédéterminée d'un compteur de temps,
- réception d'une requête de freinage automatique d'urgence,
- activation d'un freinage automatique d'urgence,
- consommation de la réserve de freinage et décrémentation du niveau de la réserve de freinage tant que ledit freinage automatique d'urgence est actif,
- désactivation du freinage automatique d'urgence dès que la réception de la requête est interrompue ou que le niveau de la réserve de freinage est nul,
- incrémentation d'un compteur de temps dès la désactivation du freinage automatique d'urgence et tant qu'aucun nouveau freinage automatique d'urgence n'est activé,
- remise à la valeur de temps prédéterminée dudit compteur de temps dès qu'un seuil de temps prédéterminé est atteint par le compteur de temps ou dès qu'un nouveau freinage automatique d'urgence est activé avant l'atteinte dudit seuil de temps,
- réinitialisation de la réserve de freinage à la valeur prédéterminée dès que le compteur de temps dépasse le seuil de temps.

Ce procédé permet de ne pas surprendre le conducteur du véhicule suiveur et grâce à l'invention, la disponibilité de freinage automatique d'urgence du véhicule ego, est augmentée, tout en utilisant des données fiables et robustes, la sécurité étant ainsi renforcée, y compris en cas de plusieurs freinages successifs.

L'avantage lié à la caractéristique selon laquelle la valeur prédéterminée de la réserve de freinage s'exprime sous la forme d'une vitesse est de permettre une disponibilité s'appliquant en relatif et ainsi de ne pas restreindre l'utilisation du freinage automatique d'urgence à une condition de vitesse modérée du véhicule ego et de permettre également de décrémenter la réserve sur la base de données fiables et robustes. En variante, l'avantage lié à la caractéristique selon laquelle la valeur prédéterminée de la réserve de freinage s'exprime sous la forme d'une distance permet de prendre en compte le contexte en déterminant comme réserve la distance pendant laquelle le véhicule ego peut freiner en fonction de sa décélération. En variante, l'avantage lié à la caractéristique selon laquelle la valeur prédéterminée de la réserve de freinage s'exprime sous la forme d'une durée permet de prendre en compte le contexte en déterminant comme réserve la durée de freinage d'urgence pendant laquelle le véhicule ego peut freiner en fonction de sa décélération.

Selon une caractéristique avantageuse, le procédé comporte également une étape de détermination d'une variable représentative de la dynamique du véhicule ego, la variable représentative de la dynamique du véhicule ego étant une norme du vecteur vitesse du véhicule ego ‖Vego‖, ce qui permet d'utiliser une variable robuste transitant sur le réseau véhicule CAN (de l'anglais Controller Area Network). De même, avantageusement, si la réserve de freinage s'exprime sous la forme d'une distance, la variable représentative de la dynamique du véhicule ego correspond à la norme du vecteur vitesse du véhicule ego ‖Vego‖, ce qui permet de calculer sur la base d'un modèle la distance parcourue par le véhicule ego lors du freinage d'urgence activé, ce qui permet également de raisonner en échelle relative et non absolue.

L'avantage lié à la caractéristique selon laquelle la valeur de temps prédéterminée du compteur de temps vaut zéro, permet de simplifier le procédé en procédant par incrémentation positive du compteur de temps.

Selon une caractéristique avantageuse, la décrémentation du niveau de la réserve de freinage Réserve entre un pas de temps courant t et un pas de temps précédent t-1 est calculée par retranchement au niveau de la réserve Réserve de la différence entre la norme du vecteur vitesse de l'ego ‖Vego‖ au pas de temps précédent t-1 et la norme du vecteur vitesse de l'égo ‖Vego‖ au pas de temps courant t, selon l'équation :

$$\text{Réserve}(t) = \text{Réserve}(t-1) - (\|\text{Vego}(t-1)\| - \|\text{Vego}(t)\|)$$

à condition que ladite différence ‖Vego(t-1)‖ - ‖Vego(t)‖ soit positive.

Ce calcul permet de ne pas prendre en compte dans la décrémentation les cas où la vitesse pour des raisons extérieures (pente par exemple) augmenterait.

L'avantage lié à la caractéristique selon laquelle la valeur prédéterminée de la réserve de freinage est fonction de la situation de roulage, permet notamment de s'adapter à la nature urbaine ou extra-urbaine du roulage.

Selon une autre caractéristique avantageuse, ledit seuil de temps vaut entre deux et cinq secondes, préférentiellement quatre secondes, ce qui permet de distinguer les évènements suscitant un freinage automatique d'urgence, tout en préservant la durée de vie des moyens de freinage sollicités par le contrôleur VDC.

Selon une autre caractéristique avantageuse, le procédé comprend également une étape de détection d'un véhicule suiveur derrière le véhicule ego, ce qui permet de pouvoir caractériser le risque de collision arrière.

Selon une autre caractéristique avantageuse, ledit seuil de temps est fonction de la détection d'un véhicule suiveur, c'est-à-dire est fonction de la présence ou de l'absence d'un véhicule suiveur détecté, ce qui permet de diminuer le seuil de temps en l'absence de véhicule suiveur car il n'y a pas de risque de surprendre son conducteur en autorisant des freinages successifs rapprochés.

Avantageusement, la valeur prédéterminée d'initialisation du niveau de la réserve de freinage est fonction de la détection d'un véhicule suiveur , c'est-à-dire de la présence ou de l'absence d'un véhicule suiveur détecté, ce qui permet d'augmenter la réserve en l'absence de véhicule suiveur car il n'y a pas de risque de surprendre son conducteur en autorisant tout freinage puisque la contrainte d'écart de vitesse relative entre le véhicule ego et le véhicule suiveur n'a plus d'objet.

L'invention concerne également un module de contrôle de freinage automatique d'urgence comprenant des moyens de mettre en œuvre le procédé selon l'invention, ce qui présente des avantages analogues à ceux du procédé.

L'invention concerne également un véhicule automobile comprenant un module selon l'invention, ce qui présente des avantages analogues à ceux du procédé, le dispositif étant embarqué à bord du véhicule.

L'invention concerne également un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en œuvre le procédé selon l'invention.

L'invention concerne également un support d'enregistrement de données comprenant des instructions qui, lorsqu'elles sont exécutées par un ordinateur, conduisent celui-ci à mettre en œuvre le procédé selon l'invention.

L'invention concerne également un signal d'un support de données, portant le produit programme d'ordinateur selon l'invention.

D'autres buts, caractéristiques et avantages de l'invention apparaîtront à la lecture de la description suivante, donnée uniquement à titre d'exemple non limitatif, et faite en référence aux figures annexées sur lesquelles :

[Fig.1] La [Fig.1], dont il a déjà été fait mention, montre l'architecture générale d'un dispositif de freinage d'urgence incorporé dans un véhicule selon l'état de la technique ; et,

[Fig.2] la [Fig.2] représente un organigramme du fonctionnement du procédé selon l'invention, et,

[Fig.3] la [Fig.3] représente une vue schématique d'une situation de conduite du véhicule.

Dans l'ensemble du texte les directions et orientations sont désignées en référence à un repère orthonormé direct XYZ classiquement utilisé en conception automobile, dans lequel X désigne la direction longitudinale du véhicule, dirigé vers l'avant, Y est la direction transversale au véhicule, dirigé vers la gauche et Z est la direction verticale dirigée vers le haut. Les notions « avant » et « arrière » sont indiquées en référence au sens de marche normal vers l'avant du véhicule. Pour plus de clarté, les éléments identiques ou similaires sont repérés par des signes de référence identiques sur l'ensemble des figures.

Dans un mode de réalisation, le véhicule ego 1, autonome ou non, dispose d'un essieu avant directeur avec des roues avant et d'un essieu arrière ayant des roues arrière 10 avec lesquelles il peut être entraîné. Le véhicule 1 a un moteur à combustion interne et/ou électrique, qui entraîne les roues arrière via un engrenage, un arbre de transmission, un engrenage différentiel et des arbres d'entraînement de l'essieu arrière. Les roues du véhicule sont reliées à des moyens de freinage respectifs, qui peuvent être actionnés par un fluide sous pression. La direction des roues avant s'effectue au moyen d'un volant et d'un dispositif de direction disposé sur l'essieu avant.

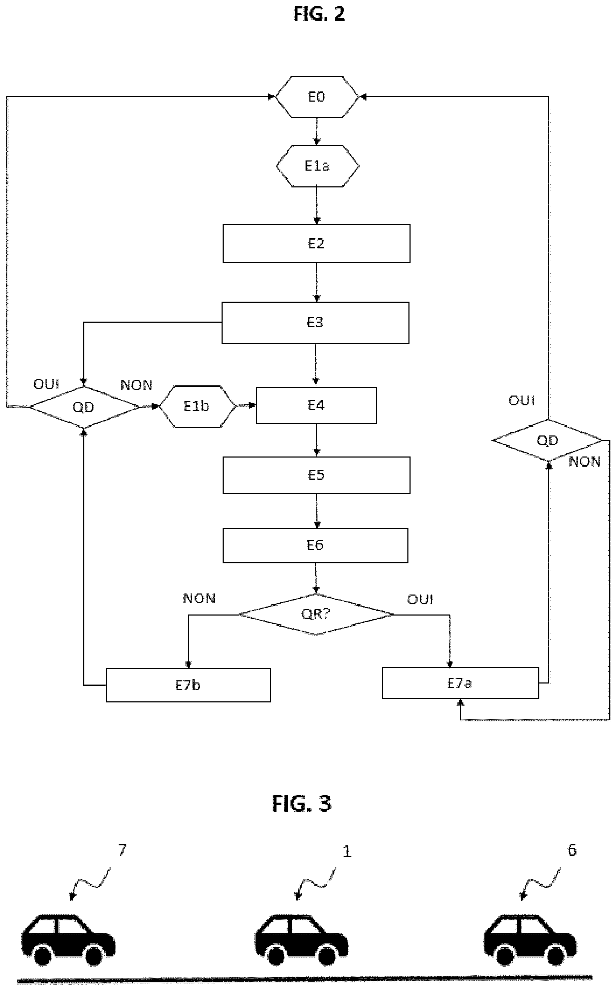

En [Fig.2], l'organigramme du fonctionnement du procédé selon un mode préférentiel de l'invention est représenté. Le procédé de commande de freinage automatique d'urgence d'un véhicule automobile ego 1 comporte les étapes suivantes :

- E0 : initialisation d'un niveau d'une réserve de freinage à une valeur prédéterminée,
- E1a : initialisation à une valeur de temps prédéterminée d'un compteur de temps,
- E2 : détermination d'une variable représentative de la dynamique du véhicule ego 1,
- E3 : réception d'une requête de freinage automatique d'urgence,
- E4 : activation d'un (premier) freinage automatique d'urgence,

- **E5** : consommation de la réserve de freinage et décrémentation du niveau de la réserve de freinage en fonction de la vitesse du véhicule ego Vego tant que ledit freinage automatique d'urgence est actif,
- **E6** : désactivation du freinage automatique d'urgence dès que la réception de la requête est interrompue ou que le niveau de la réserve de freinage est nul,
- **E7a et E7b** : incrémentation d'un compteur de temps dès la désactivation du freinage automatique d'urgence et tant qu'aucun nouveau freinage automatique d'urgence n'est activé,
- **E1b** : remise à la valeur de temps prédéterminée dudit compteur dès un seuil de temps prédéterminé atteint par le compteur de temps ou dès qu'un nouveau freinage automatique d'urgence est activé avant l'atteinte dudit seuil de temps,
- **E0** : réinitialisation de la réserve de freinage à la valeur prédéterminée dès que le compteur de temps dépasse le seuil de temps.

Le procédé représenté ici est embarqué dans un module de contrôle de freinage automatique d'urgence du module 3 de freinage automatique d'urgence, lequel est intégré préférentiellement au sein du contrôleur ADAS du système d'aide à la conduite 2, mais il peut également être intégré au contrôleur d'un des moyens de perception 4, tel que le contrôleur de la caméra par exemple.

Dans un mode non limitatif, à la mise en route du véhicule ego 1, le niveau de la réserve de freinage est initialisé à l'étape E0 à une valeur prédéterminée de vitesse relative. On appelle réserve de vitesse relative la réduction de vitesse disponible à l'instant t pour le véhicule ego, par opposition à une limitation du freinage automatique d'urgence conditionnée par une vitesse maximale du véhicule ego. Le terme de vitesse d'applique ici à la norme du vecteur vitesse du véhicule ego $\|Vego\|$. La valeur prédéterminée de vitesse relative vaut entre 50 et 90 km/h, préférentiellement 80 km/h, cette valeur peut également être fonction de la situation de roulage, par exemple en roulage urbain, dont le cas d'usage est déterminé au moyen de la reconnaissance optique des panneaux de signalisation, la valeur prédéterminée de vitesse relative serait de 50 km/h alors qu'en roulage extra-urbain, la valeur prédéterminée de vitesse relative serait de 80 km/h.

En variante, la réserve peut aussi être initialisée à une valeur prédéterminée de temps de freinage de l'égo véhicule, cette réserve de temps correspondant à l'instant t, au temps de freinage autorisé du véhicule ego. Ce temps peut être basé sur le temps avant collision TTC (de l'acronyme anglo-saxon « Time To Collision ») calculé par ailleurs et reçu par le module de contrôle de freinage automatique d'urgence, mais préférentiellement ce temps de freinage d'urgence est calculé comme étant le temps de freinage nécessaire en approximant la décélération en freinage automatique d'urgence à 1g pour une réduction de la vitesse du véhicule égo 1 ici de la totalité de la réserve, soit ici 80km/h, au moyen par exemple d'un modèle à accélération ou vitesse constante du comportement de la cible.

En variante, la réserve peut aussi être initialisée à une distance, cette réserve correspondant, à l'instant t, à la distance autorisée de freinage d'urgence pour le véhicule ego. Cette distance peut être basée sur la distance avant collision DTC (de l'acronyme anglo-saxon « Distance To Collision ») calculée par ailleurs et reçue par le module de contrôle de freinage automatique d'urgence, mais préférentiellement, comme précédemment, cette distance de freinage d'urgence est calculée comme étant la distance de freinage parcourue en approximant la décélération en freinage automatique d'urgence à 1g pour une réduction de la vitesse du véhicule égo 1 ici de 80km/h, au moyen par exemple d'un modèle à accélération ou vitesse constante du comportement de la cible.

Toutes ces variantes permettent de raisonner en relatif et non pas en absolu, tel que c'est le cas lorsque le freinage automatique d'urgence est conditionné par une vitesse maximale du véhicule ego, puisqu'il est question de réserve qu'elle soit en vitesse, durée ou distance de freinage automatique d'urgence.

Ainsi, si la réserve de vitesse relative est de 80km/h, et que le véhicule ego 1 circulant à 130km/h freine sur un véhicule cible roulant à 60km/h, alors le véhicule ego bénéficiera du freinage automatique d'urgence jusqu'à atteindre la fin de requête de freinage et il lui restera dans sa réserve 10 km/h.

L'étape E1a d'initialisation à une valeur de temps prédéterminée, ici zéro, du compteur de temps a préférentiellement lieu simultanément à l'étape E0 d'initialisation du niveau de la réserve et permet de compter de manière incrémentale, lors de l'étape ultérieure E7a et E7b pour des raisons de simplification et de manière à permettre aisément la gestion de seuils de temps, mais ce compteur pourrait également être initialisé à la valeur prédéterminée du seuil de temps en étape E1a et E1b et décrémenté (c'est à dire incrémenté négativement) en étape E7a et E7b.

L'étape E2 de détermination d'une variable représentative de la dynamique du véhicule ego 1 a lieu à chaque pas de temps, avec un cadencement toutes les 10 millisecondes par exemple. La variable représentative de la dynamique du véhicule correspond préférentiellement à la norme du vecteur vitesse du véhicule ego 1 puisque la réserve de freinage est dans cet exemple exprimée en vitesse. De même, si la réserve de freinage est exprimée en distance, la vitesse du véhicule ego 1 constitue une variable représentative de la dynamique à prendre en considération afin de calculer la distance parcourue par le véhicule ego de manière sécuritaire au moyen d'un modèle tel que précédemment décrit par exemple, et si la réserve est exprimée en durée il n'est pas utile d'acquérir de variable représentative de la dynamique spécifique puisque la réserve se décrémente temporellement directement.

Ainsi, dès qu'une cible 6 est détectée (étape non représentée), la cible 6 est dynamiquement caractérisée, , et en fonction de ces caractéristiques une première requête de freinage automatique d'urgence, qui est un freinage sécuritaire, est envoyée par un module du système 2 d'assistance ADAS vers le module 3 de freinage automatique d'urgence, qui va réceptionner à l'étape E3 cette première requête de freinage automatique d'urgence relative à la cible détectée. Sur réception de cette requête est activée à l'étape E4 le premier freinage automatique d'urgence, c'est-à-dire que le module 3 de freinage automatique d'urgence l'autorise, la réserve étant pleine, et transmet la commande de freinage automatique d'urgence au système de pilotage 5 des moyens de freinage et plus particulièrement au contrôleur VDC qui pilotera en soit en consigne de décélération (g) , soit en couple (Nm) les moyens de freinage de manière à exécuter la commande de freinage automatique d'urgence allant jusqu'à une force de 1g.

Tant que la requête perdure et que le premier freinage automatique d'urgence est activé, la réserve de freinage est consommée à l'étape E5 ce qui se traduit par une décrémentation du niveau de la réserve de freinage en fonction de la vitesse du véhicule ego, sachant qu'il y a désactivation du freinage automatique d'urgence à l'étape E6 dès que la réception de la requête est interrompue ou que la réserve de freinage est épuisée, c'est-à-dire que son niveau est nul. Ainsi, la réserve de freinage décroît en fonction de la vitesse relative, reçue par la loi de commande toutes les 10ms, à chaque pas de temps de 10 ms la décrémentation du niveau de la réserve de freinage entre un pas de temps courant et un pas de temps précédent est donc calculé par retranchement à la réserve courante Reserve (t) la différence entre la norme du vecteur vitesse de l'ego Vego au pas de temps précédent t-1 et la norme du vecteur vitesse de l'égo Vego au pas de temps courant t si elle est positive, c'est-à-dire selon l'équation Réserve(t) = Réserve(t-1) - ($\|Vego(t-1)\|$ - $\|Vego(t)\|$) , si $\|Vego(t-1)\|$ - $\|Vego(t)\|$ positif

et ce, jusqu'à, soit son épuisement total, relâchant l'action des freins et inhibant l'action de freiner automatiquement pendant un délai déterminé à l'avance et correspondant au seuil de temps prédéterminé, soit la requête peut être interrompue pour cause notamment de succès du freinage ou perte de la cible, la valeur de la réserve demeurant alors figée à sa valeur de l'instant précédent. La vitesse, c'est-à-dire la norme du vecteur vitesse du véhicule $\|Vego\|$, qui est utilisée ici, est d'autant plus disponible qu'elle transite sur le réseau CAN et constitue une variable très robuste puisqu'elle bénéficie du niveau d'ASIL B de l'acronyme anglo-saxon « Automative Safety Integrity Level ». Contrairement à une réserve en temps ou en distance, la réserve en vitesse est préférée car elle permet de s'affranchir d'hypothèse sur le véhicule ego 1 (a minima modèle à accélération ou vitesse constante du comportement du véhicule ego) quand bien même l'hypothèse peut être dynamique en se mettant à jour à chaque pas de temps en fonction de la vitesse ou de l'accélération du véhicule ego 1.

De même que pour la gestion du seuil de temps, la gestion de la réserve est préférentiellement une décrémentation pour des raisons de simplification puisque cela permet notamment de travailler avec des valeurs positives uniquement mais elle pourrait par exemple être aussi effectuée par une initialisation du niveau négative en étape E0 puis par une incrémentation en étape E5 jusqu'à atteindre le niveau nul.

La suite du procédé varie en fonction du niveau restant dans la réserve de manière à pouvoir effectuer des freinages successifs dans la limite d'une réserve de vitesse non nulle, ce qui robustifie l'activation du freinage automatique d'urgence notamment en cas de phénomène de perte puis réapparition de cibles dû aux capteurs. Un test de niveau vide de la réserve est effectué à l'étape QR ?, si le niveau de la réserve est nul OUI, on passe en étape E7a, c'est-à-dire que dans cette situation, dès que le freinage automatique d'urgence est désactivé, le compteur de temps est incrémenté à chaque pas de temps et tant que le seuil de temps, préférentiellement de quatre secondes, n'est pas atteint, ce qui est représenté sur le schéma par un test QD d'atteinte du seuil de temps. Ainsi dès que le seuil de temps de quatre secondes est atteint OUI le procédé reboucle sur l'étape E0 de réinitialisation de la réserve de freinage à la valeur prédéterminée et sinon NON l'étape E7a d'incrémentation du compteur. Pendant l'étape d'incrémentation E7a aucun freinage automatique d'urgence ne peut être activé car la réserve est nulle, en effet, quand bien même une requête serait effectuée par un module du système ADAS il ne serait pas autorisé par le module 3 de freinage automatique d'urgence et le freinage automatique d'urgence ne serait donc pas activé.

Après la désactivation du premier freinage automatique d'urgence, si à l'issue du test de niveau vide de la réserve effectué à l'étape QR ?, le niveau de réserve est non nul NON, ce qui signifie qu'il demeure une réserve de freinage automatique d'urgence disponible, il est procédé à l'étape 7b d'incrémentation du compteur à chaque pas de temps et tant qu'aucun freinage automatique d'urgence n'est activé. En effet, en cas de réception E3 d'une nouvelle requête de freinage automatique, il est procédé à un test QD d'atteinte du seuil de temps, et si le seuil de temps, est atteint OUI, ce qui signifie qu'il reste de la réserve disponible mais que le nouveau freinage d'urgence requis n'appartient pas à la même scène que le premier évènement ayant suscité le premier freinage automatique d'urgence, il est procédé à un rebouclage du procédé sur l'étape E0 d'initialisation de la réserve et E1a de mise à la valeur de temps prédéterminée, c'est à dire zéro ici, du compteur de temps, alors si le seuil de temps n'est pas atteint NON, ce qui signifie qu'il reste de la réserve disponible et que le nouveau freinage d'urgence requis appartient toujours à la même scène que le premier évènement ayant suscité le premier freinage automatique d'urgence, ce qui peut arriver notamment en cas de perte momentanée de la cible 6 par les capteurs, alors le compteur de temps est remis à zéro à l'étape E1b, et un nouveau freinage automatique d'urgence est activé à l'étape E4, c'est-à-dire que le module 3 de freinage automatique d'urgence l'autorise, la réserve étant partielle, et transmet la commande de freinage automatique d'urgence au système de pilotage 5 des moyens de freinage et plus particulièrement au contrôleur VDC qui pilotera en consigne de décélération les moyens de freinage de manière à exécuter la commande de freinage automatique d'urgence allant jusqu'à une force maximale de 1g. L'étape E1b de remise à zéro du compteur de temps permet d'assurer que quatre secondes sont bien attendues pour retrouver une réserve pleine dès que nous se sommes plus sous freinage, la valeur de quatre secondes correspondant à la valeur préférentielle du seuil de temps.

Le seuil de temps vaut entre deux et cinq secondes, ce qui permet de distinguer les évènements suscitant un freinage automatique d'urgence d'une scène à l'autre, tout en préservant la durée de vie des moyens de freinage sollicités par le contrôleur VDC.

En référence à la [Fig.2], le procédé comprend avantageusement une étape de détection d'un véhicule suiveur 7 du véhicule ego, réalisée par un de ses moyens de perception 4 orienté vers l'arrière tel qu'un radar ou une caméra, cette étape étant réalisée à chaque pas de temps, ce qui permet de pouvoir caractériser le risque de collision arrière.

Ainsi, la valeur du seuil de temps est préférentiellement prédéterminée en fonction de la présence ou de l'absence d'un véhicule suiveur 7 détecté le long du parcours correspondant à une distance de visée prédéterminée, ladite distance étant préférentiellement fonction de la différence de vitesse entre le véhicule suiveur 7 et le véhicule ego 1, par exemple en diminuant voire en annulant la valeur du seuil de temps en l'absence de véhicule suiveur 7 car il n'y a pas de risque de surprendre son conducteur en autorisant des freinages successifs rapprochés.

De même, la valeur prédéterminée d'initialisation du niveau de la réserve de freinage est préférentiellement fonction de la présence ou de l'absence d'un véhicule suiveur 7 détecté, par exemple en augmentant, par exemple à plus de 100 km/h, préférentiellement 130 km/h, la réserve en l'absence de véhicule suiveur 7 car il n'y a pas de risque de surprendre son conducteur en autorisant tout freinage puisque la contrainte d'écart de vitesse relative entre le véhicule ego et le véhicule suiveur n'a plus d'objet.

**Revendications**

1. Procédé de commande de freinage automatique d'urgence d'un véhicule automobile ego (1) comportant les étapes suivantes :

   - (E0) initialisation d'un niveau d'une réserve de freinage à une valeur prédéterminée,
   - (E1a) initialisation à une valeur de temps prédéterminée d'un compteur de temps,
   - (E3) réception d'une requête de freinage automatique d'urgence,
   - (E4) activation d'un freinage automatique d'urgence,
   - (E5) consommation de la réserve de freinage et décrémentation du niveau de la réserve de freinage tant que ledit freinage automatique d'urgence est actif,
   - (E6) désactivation du freinage automatique d'urgence dès que la réception de la requête est interrompue ou que le niveau de la réserve de freinage est nul,

   ce procédé étant **caractérisé par** les étapes suivantes:

   - (E7a, E7b) incrémentation d'un compteur de temps dès la désactivation du freinage automatique d'urgence et tant qu'aucun nouveau freinage automatique d'urgence n'est activé,
   - (E1b) remise à la valeur de temps prédéterminée dudit compteur de temps dès qu'un seuil de temps prédéterminé est atteint par le compteur de temps ou dès qu'un nouveau freinage automatique d'urgence est activé avant l'atteinte dudit seuil de temps,
   - (E0) réinitialisation de la réserve de freinage à la valeur prédéterminée dès que le compteur de temps dépasse le seuil de temps ;

   la valeur prédéterminée de la réserve de freinage s'exprimant sous la forme d'une vitesse, d'une distance ou d'une durée.

2. Procédé de commande de freinage automatique d'urgence d'un véhicule automobile ego (1) selon la revendication précédente **caractérisé en ce que** la valeur de temps prédéterminée du compteur de temps vaut zéro.

3. Procédé de commande de freinage automatique d'urgence d'un véhicule automobile ego (1) selon l'une quelconque des revendications précédentes **caractérisé en ce que** la valeur prédéterminée de la réserve de freinage est fonction de la situation de roulage, notamment urbaine ou extra-urbaine.

4. Procédé de commande de freinage automatique d'urgence d'un véhicule automobile ego (1) selon l'une quelconque des revendications précédentes **caractérisé en ce que** le procédé comporte également une étape de détermination d'une variable représentative de la dynamique du véhicule ego, la variable représentative de la dynamique du véhicule ego étant une norme du vecteur vitesse du véhicule ego ‖Vego‖.

5. Procédé de commande de freinage automatique d'urgence d'un véhicule automobile ego (1) selon la revendication précédente **caractérisé en ce que** la décrémentation du niveau de la réserve de freinage (Réserve) entre un pas de temps courant (t) et un pas de temps précédent (t-1) est calculée par retranchement au niveau de la réserve (Réserve) de la différence entre la norme du vecteur vitesse de l'ego (‖Vego‖) au pas de temps précédent (t-1) et la norme du vecteur vitesse de l'égo (‖Vego‖) au pas de temps courant (t),selon l'équation

$$\text{Réserve}(t) = \text{Réserve}(t\text{-}1) - (\|Vego(t\text{-}1)\| - \|Vego(t)\|)$$

à condition que ladite différence (‖Vego(t-1)‖ - ‖Vego(t)‖) soit positive.

6. Procédé de commande de freinage automatique d'urgence d'un véhicule automobile ego (1) selon l'une quelconque des revendications précédentes **caractérisé en ce que** ledit seuil de temps vaut entre deux et cinq secondes, préférentiellement quatre secondes.

7. Procédé de commande de freinage automatique d'urgence d'un véhicule automobile ego (1) selon l'une quelconque des revendications précédentes **caractérisé en ce que** le procédé comprend également une étape de détection d'un véhicule suiveur (7) derrière le véhicule ego (1).

8. Procédé de commande de freinage automatique d'urgence d'un véhicule automobile ego (1) selon l'une quelconque des revendications précédentes **caractérisé en ce que** ledit seuil de temps est fonction de la détection d'un véhicule suiveur (7).

9. Procédé de commande de freinage automatique d'urgence d'un véhicule automobile ego (1) selon l'une quelconque des revendications précédentes **caractérisé en ce que** la valeur prédéterminée d'initialisation du niveau de la réserve de freinage est fonction de la détection d'un véhicule suiveur (7).

10. Module de contrôle de freinage automatique d'urgence comprenant des moyens de mettre en œuvre le procédé de commande de freinage automatique d'urgence d'un véhicule automobile ego (1) selon l'une quelconque des revendications précédentes.

11. Véhicule automobile (1) comprenant des moyens de perception (4), un système d'aide à la conduite (2), et un système (5) de pilotage de moyens de freinage, ledit véhicule comportant également un module de contrôle de freinage automatique d'urgence selon la revendication précédente.

12. Produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en œuvre le procédé de commande de freinage automatique d'urgence d'un véhicule automobile ego (1) selon l'une quelconque des revendications 1 à 9.

13. Support d'enregistrement de données comprenant des instructions qui, lorsqu'elles sont exécutées par un ordinateur, conduisent celui-ci à mettre en œuvre le procédé de commande de freinage automatique d'urgence d'un véhicule automobile ego (1) selon l'une quelconque des revendications 1 à 9.


**Patentansprüche**

1. Verfahren zur Steuerung einer automatischen Notbremsung eines Ego-Kraftfahrzeugs (1), umfassend die folgenden Schritte:

- (E0) Initialisieren eines Niveaus einer Bremsreserve auf einen vorbestimmten Wert,
- (E1a) Initialisieren eines Zeitzählers auf einen vorbestimmten Zeitwert,
- (E3) Empfangen einer Anforderung einer automatischen Notbremsung,
- (E4) Aktivieren einer automatischen Notbremsung,

- (E5) Verbrauchen der Bremsreserve und Dekrementieren des Niveaus der Bremsreserve, solange die automatische Notbremsung aktiv ist,
- (E6) Deaktivieren der automatischen Notbremsung, sobald das Empfangen der Anforderung unterbrochen wird oder das Niveau der Bremsreserve null ist,

wobei dieses Verfahren durch die folgenden Schritte gekennzeichnet ist:

- (E7a, E7b) Inkrementieren eines Zeitzählers ab der Deaktivierung der automatischen Notbremsung an und solange keine erneute automatische Notbremsung aktiviert wird,
- (E1b) Zurücksetzen des Zeitzählers auf den vorbestimmten Zeitwert, sobald ein vorbestimmter Zeitschwellenwert von dem Zeitzähler erreicht wird oder sobald eine erneute automatische Notbremsung vor dem Erreichen des Zeitschwellenwerts erreicht wird,
- (E0) Reinitialisieren der Bremsreserve auf den vorbestimmten Wert, sobald der Zeitzähler den Zeitschwellenwert überschreitet;

wobei der vorbestimmte Wert der Bremsreserve in Form einer Geschwindigkeit, einer Distanz oder einer Dauer ausgedrückt wird.

2. Verfahren zur Steuerung einer automatischen Notbremsung eines Ego-Kraftfahrzeugs (1) nach dem vorhergehenden Anspruch, **dadurch gekennzeichnet, dass** der vorbestimmte Zeitwert des Zeitzählers den Wert null hat.

3. Verfahren zur Steuerung einer automatischen Notbremsung eines Ego-Kraftfahrzeugs (1) nach einem der vorhergehenden Ansprüche, **dadurch gekennzeichnet, dass** der vorbestimmte Wert der Bremsreserve von der Fahrsituation, insbesondere innerstädtisch oder außerstädtisch, abhängig ist.

4. Verfahren zur Steuerung einer automatischen Notbremsung eines Ego-Kraftfahrzeugs (1) nach einem der vorhergehenden Ansprüche, **dadurch gekennzeichnet, dass** das Verfahren auch einen Schritt des Bestimmens einer für die Dynamik des Ego-Fahrzeugs repräsentativen Variable umfasst, wobei die für die Dynamik des Ego-Fahrzeugs repräsentative Variable eine Norm des Geschwindigkeitsvektors des Ego-Fahrzeugs $\|Vego\|$ ist.

5. Verfahren zur Steuerung einer automatischen Notbremsung eines Ego-Kraftfahrzeugs (1) nach dem vorhergehenden Anspruch, **dadurch gekennzeichnet, dass** das Dekrementieren des Niveaus der Bremsreserve (Reserve) zwischen einem aktuellen Zeitschritt (t) und einem vorhergehenden Zeitschritt (t-1) durch Abziehen der Differenz zwischen der Norm des Geschwindigkeitsvektors des Egos ($\|Vego\|$) zum vorhergehenden Zeitschritt (t-1) und der Norm des Geschwindigkeitsvektors des Egos ($\|Vego\|$) zum aktuellen Zeitschritt (t) von dem Niveau der Reserve (Reserve) berechnet wird nach der Gleichung Reserve (t) = Reserve (t-1) - ($\|Vego(t-1)\|$ - $\|Vego(t)\|$) unter der Bedingung, dass die Differenz ($\|Vego(t-1)\|$ - $\|Vego(t)\|$) positiv ist.

6. Verfahren zur Steuerung einer automatischen Notbremsung eines Ego-Kraftfahrzeugs (1) nach einem der vorhergehenden Ansprüche, **dadurch gekennzeichnet, dass** der Zeitschwellenwert einen Wert zwischen zwei und fünf Sekunden, bevorzugt vier Sekunden, hat.

7. Verfahren zur Steuerung einer automatischen Notbremsung eines Ego-Kraftfahrzeugs (1) nach einem der vorhergehenden Ansprüche, **dadurch gekennzeichnet, dass** das Verfahren auch einen Schritt des Detektierens eines nachfolgenden Fahrzeugs (7) hinter dem Ego-Fahrzeug (1) umfasst.

8. Verfahren zur Steuerung einer automatischen Notbremsung eines Ego-Kraftfahrzeugs (1) nach einem der vorhergehenden Ansprüche, **dadurch gekennzeichnet, dass** der Zeitschwellenwert von der Detektion eines nachfolgenden Fahrzeugs (7) abhängig ist.

9. Verfahren zur Steuerung einer automatischen Notbremsung eines Ego-Kraftfahrzeugs (1) nach einem der vorhergehenden Ansprüche, **dadurch gekennzeichnet, dass** der vorbestimmte Initialisierungswert des Niveaus der Bremsreserve von der Detektion eines nachfolgenden Fahrzeugs (7) abhängig ist.

10. Modul zur Steuerung einer automatischen Notbremsung, das Mittel zur Implementierung des Verfahrens zur Steuerung einer automatischen Notbremsung eines Ego-Kraftfahrzeugs (1) nach einem der vorhergehenden Ansprüche beinhaltet.

11. Kraftfahrzeug (1), das Wahrnehmungsmittel (4), ein Fahrassistenzsystem (2) und ein System (5) zur Ansteuerung von Bremsmitteln beinhaltet, wobei das Fahrzeug auch ein Modul zur Steuerung einer automatischen Notbremsung nach dem vorhergehenden Anspruch umfasst.

12. Computerprogrammprodukt, das über ein Kommunikationsnetz herunterladbar ist und/oder auf einem computerlesbaren Datenträger gespeichert ist und/oder durch einen Computer ausführbar ist und Anweisungen beinhaltet, die bei der Ausführung des Programms durch den Computer diesen veranlassen, das Verfahren zur Steuerung einer automatischen Notbremsung eines Ego-Kraftfahrzeugs (1) nach einem der Ansprüche 1 bis 9 zu implementieren.

13. Datenspeichermedium, das Anweisungen beinhaltet, die bei ihrer Ausführung durch einen Computer diesen veranlassen, das Verfahren zur Steuerung einer automatischen Notbremsung eines Ego-Kraftfahrzeugs (1) nach einem der Ansprüche 1 bis 9 zu implementieren.

**Claims**

1. Method for controlling autonomous emergency braking of an ego motor vehicle (1), comprising the following steps:

   - (E0) initializing a braking reserve level to a predetermined value,
   - (E1a) initializing a time counter to a predetermined time value,
   - (E3) receiving a request for autonomous emergency braking,
   - (E4) activating autonomous emergency braking,
   - (E5) consuming the braking reserve and decrementing the braking reserve level for as long as said autonomous emergency braking is active,
   - (E6) deactivating the autonomous emergency braking as soon as receipt of the request is interrupted or the braking reserve level reaches zero,

   the method being **characterized by** the following steps:

   - (E7a, E7b) incrementing a time counter as soon as autonomous emergency braking is deactivated and as long as no new autonomous emergency braking is activated,
   - (E1b) resetting said time counter to the predetermined time value as soon as a predetermined time threshold is reached by the time counter or as soon as new autonomous emergency braking is activated before said time threshold is reached,
   - (E0) resetting the braking reserve to the predetermined value as soon as the time counter exceeds the time threshold,

   the predetermined value of the braking reserve being expressed in the form of a speed, of a distance or of a time.

2. Method for controlling autonomous emergency braking of an ego motor vehicle (1) according to the preceding claim, **characterized in that** the predetermined time value of the time counter is zero.

3. Method for controlling autonomous emergency braking of an ego motor vehicle (1) according to any one of the preceding claims, **characterized in that** the predetermined value of the braking reserve is dependent on the driving situation, and in particular on whether it is urban or extra-urban.

4. Method for controlling autonomous emergency braking of an ego motor vehicle (1) according to any one of the preceding claims, **characterized in that** the method also comprises a step of determining a variable representative of the dynamics of the ego vehicle, the variable representative of the dynamics of the ego vehicle being a norm $\|Vego\|$ of the velocity vector of the ego vehicle.

5. Method for controlling autonomous emergency braking of an ego motor vehicle (1) according to the preceding claim, **characterized in that** the decrementation of the level of the braking reserve (Reserve) between a current time interval (t) and a previous time interval (t-1) is computed by subtracting, from the level of the reserve (Reserve), the difference between the norm ($\|Vego\|$) of the ego velocity vector in the previous time interval (t-1) and the norm ($\|Vego\|$) of the ego velocity vector in the current time interval (t), according to the equation Reserve (t) = Reserve (t-1) - ($\|Vego(t-1)\|$ - $\|Vego(t)\|$) provided that said difference ($\|Vego(t-1)\|$ - $\|Vego(t)\|$) is positive.

6.  Method for controlling autonomous emergency braking of an ego motor vehicle (1) according to any one of the preceding claims, **characterized in that** said time threshold is between two and five seconds, and is preferably four seconds.

7.  Method for controlling autonomous emergency braking of an ego motor vehicle (1) according to any one of the preceding claims, **characterized in that** the method also comprises a step of detecting a following vehicle (7) behind the ego vehicle (1).

8.  Method for controlling autonomous emergency braking of an ego motor vehicle (1) according to any one of the preceding claims, **characterized in that** said time threshold is dependent on detection of a following vehicle (7).

9.  Method for controlling autonomous emergency braking of an ego motor vehicle (1) according to any one of the preceding claims, **characterized in that** the predetermined initialization value of the braking reserve level is dependent on detection of a following vehicle (7).

10. Module for controlling autonomous emergency braking comprising means for implementing the method for controlling autonomous emergency braking of an ego motor vehicle (1) according to any one of the preceding claims.

11. Motor vehicle (1) comprising perceiving means (4), an advanced driver assistance system (2), and a system (5) for controlling breaking means, said vehicle also comprising a module for controlling autonomous emergency braking according to the preceding claim.

12. Computer program product downloadable from a communication network and/or stored on a data medium that is readable by a computer and/or executable by a computer, comprising instructions that, when the program is executed by the computer, cause the latter to implement the method for controlling autonomous emergency braking of an ego motor vehicle (1) according to any one of Claims 1 to 9.

13. Data storage medium comprising instructions that, when they are executed by a computer, cause the latter to implement the method for controlling autonomous emergency braking of an ego motor vehicle (1) according to any one of Claims 1 to 9.

FIG. 1

ART ANTERIEUR

## FIG. 2

## FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3119648 A
- EP 3625092 A
- FR 1758199

- DE 102010029223
- US 2016221549 A
- FR 2763902 A1